(19) Europäisches Patentamt
European Patent Office
Office européen des brevets

(11) **EP 2 500 321 B1**

(12) **EUROPÄISCHE PATENTSCHRIFT**

(45) Veröffentlichungstag und Bekanntmachung des Hinweises auf die Patenterteilung:
**06.09.2017 Patentblatt 2017/36**

(51) Int Cl.:
***C02F 1/46*** *(2006.01)*          *C02F 1/461* *(2006.01)*

(21) Anmeldenummer: **12158975.8**

(22) Anmeldetag: **12.03.2012**

(54) **Verfahren zum Betrieb einer elektrolytischen Wasserbehandlungsvorrichtung, insbesondere für den Kalkschutz**

Method for operating an electrolytic water treatment device, in particular for protecting against lime scale

Procédé de fonctionnement d'un dispositif de traitement d'eau électrolytique, notamment pour la protection contre l'entartrage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2011 DE 102011005506**

(43) Veröffentlichungstag der Anmeldung:
**19.09.2012 Patentblatt 2012/38**

(73) Patentinhaber: **Judo Wasseraufbereitung GmbH 71364 Winnenden (DE)**

(72) Erfinder: **Melcher, Siegfried 71720 Oberstenfeld (DE)**

(74) Vertreter: **Kohler Schmid Möbus Patentanwälte Partnerschaftsgesellschaft mbB Gropiusplatz 10 70563 Stuttgart (DE)**

(56) Entgegenhaltungen:
EP-A1- 2 233 441          EP-A2- 1 108 683
WO-A2-2004/014806          JP-A- 7 195 075
US-A1- 2005 173 242

**Beschreibung**

Die Erfindung betrifft ein Verfahren zum Betrieb einer elektrolytischen Wasserbehandlungsvorrichtung, wobei in einem Normalbetrieb an mindestens zwei Elektroden eine elektrische Spannung durchgehend oder gepulst angelegt wird, so dass ein in der Wasserbehandlungsvorrichtung vorhandenes Wasser während des Anliegens der Spannung von einem elektrischen Elektrolysestrom $I_{el}$ durchflossen wird, wobei in einem Reinigungsbetrieb mindestens eine der Elektroden abgereinigt wird,
wobei bei Feststellung eines Reinigungsbedarfs der mindestens einen Elektrode vom Normalbetrieb in den Reinigungsbetrieb gewechselt wird. Kalkablagerungen gefährden die Funktionsfähigkeit der meisten wasserführenden Geräte und Maschinen. Im Haushaltsbereich können beispielsweise Heizstäbe von Waschmaschinen verkalken und so die Heizleistung bei der Bereitung von warmem Waschwasser beeinträchtigen. In Leitungen aller Art können Kalkablagerungen zu einer Verringerung des Leitungsquerschnitts oder gar zu einem Leitungsverschluss ("Rohrinfarkt") führen.

Zur Vermeidung von Kalkablagerungen ist es bekannt, Wasser vor der Einspeisung in eine zu schützende Wasserinstallation zu enthärten. Beim Enthärten werden kalkbildende Ionen (insbesondere Calcium- und Magnesiumionen) aus dem Wasser entfernt, etwa im Ionentauschverfahren. Wasserenthärtung verändert jedoch den Mineralgehalt in Trinkwasser und ist vergleichsweise teuer, insbesondere durch den Verbrauch von Regeneriersalz für Ionentauscher.

Als Alternative zur Enthärtung ist es auch bekannt, eine elektrolytische Wasserbehandlung vorzunehmen, vgl. DE 198 52 956 C1. Dabei wird ein elektrischer Strom zwischen wenigstens zwei Elektroden, welche im zu behandelnden Wasser angeordnet sind, angelegt. Das zu behandelnde Wasser wird an den Elektroden in $H^+$- und $OH^-$-Ionen gespalten. Im Bereich der Kathode, wo der pH-Wert durch die entstehenden $OH^-$-Ionen erhöht ist, kommt es durch Verschiebung des Kalk-Kohlensäure-Gleichgewichts zur Bildung von Kalk-Impfkristallen. Eine Ausscheidung von Kalk erfolgt dann in der nachfolgenden Wasserinstallation nicht als Ablagerung an Leitungswänden oder in Geräten und Maschinen, sondern durch Kristallwachstum der Impfkristalle im Wasser. Der Kalk wird somit im Wasser gehalten ("KalkStabilisierung").

Allerdings kommt es bei der Elektrolyse auch zur Ablagerung von Kalk an der Kathode, wodurch der elektrische Stromfluss zunehmend behindert und die Wasserbehandlungsfunktion beeinträchtigt wird. Die Kathode muss daher gelegentlich gereinigt werden. Aus der DE 198 52 956 C1 ist es beispielsweise bekannt, die Kathode borstenartig auszubilden und die Kalkablagerungen mechanisch mit einem Abstreifer zu lösen. Durch die Nutzung der Reinigungsfunktion kommt es zu Verschleiß, und die Reinigung verursacht meist auch zusätzliche Betriebskosten, etwa durch den Verbrauch von Spülmittel oder Spülwasser. Daher sollten unnötige Reinigungen vermieden werden.

Eine Abreinigung der Elektroden kann regelmäßig nach Ablauf einer vordefinierten Zeit oder nach Behandlung einer vordefinierten Wassermenge erfolgen; dabei kann jedoch je nach Wasserverbrauch und Wasserqualität ein unwirtschaftliches zu frühes oder auch ein Kalkablagerungen gestattendes zu spätes Abreinigen passieren.

Es wäre denkbar, die Abreinigung vorzunehmen, wenn (bei bekannter Elektrolysespannung) der Elektrolysestrom auf einen Grenzwert gefallen ist. Aber auch dann würde der Abreinigungszeitpunkt nach den Erkenntnissen der Erfinder oft zu früh oder zu spät gewählt.

In der EP 1 108 683 A2 wird ein elektrolytisches Wasserbehandlungsverfahren dargestellt, bei dem ein Reinigungszyklus ausgelöst wird, wenn der Quotient aus Elektrolysestrom und Leitfähigkeit des Wassers 80% des Wertes nach der letzten Reinigung unterschreitet.

Aufgabe der Erfindung

Es ist die Aufgabe der vorliegenden Erfindung, die Wirtschaftlichkeit und Zuverlässigkeit des Kalkschutzes bei der elektrolytischen Wasserbehandlung zu verbessern.

Kurze Beschreibung der Erfindung

Diese Aufgabe wird auf überraschend einfache, aber wirkungsvolle Art mit einem Verfahren der eingangs genannten Art dadurch gelöst, dass zur Feststellung des Reinigungsbedarfs der Elektrolysestrom $I_{el}$ gemessen und ausgewertet wird, dass zur Feststellung des Reinigungsbedarfs weiterhin eine Leitfähigkeit LF des Wassers gemessen und ausgewertet wird, und dass der Reinigungsbedarf dadurch festgestellt wird, dass

$$Q \geq Q_0 * K * I_{el}/LF,$$

mit Q: die seit dem letzten Reinigungsbetrieb (RB) bisher behandelte Wassermenge; $Q_0$: Basiswassermenge; K: Umrechnungskonstante.

Im Rahmen der Erfindung werden sowohl der Elektrolysestrom $I_{el}$ als auch die Leitfähigkeit LF des Wassers ausgewertet. Der Elektrolysestrom (bei einer bestimmten Spannung) sinkt mit zunehmender Verkalkung der Kathode (oder anderer, im Laufe der Elektrolyse zunehmend auftretender Ablagerungen auf den Elektroden) ab und kann daher als Indikator für den Reinigungsbedarf grundsätzlich herangezogen werden. Allerdings hängt der Elektrolysestrom nicht nur vom Widerstand an der Kathode (oder allgemein den Elektroden) ab, sondern auch von der Leitfähigkeit des Wassers zwischen den Elektroden. Bei schwankender Wasserqualität, genauer gesagt schwankendem Gehalt an gelösten Ionen im Wasser, schwankt auch der Elektrolysestrom mit, obwohl sich der Verkalkungsgrad der Kathode (oder die Ablagerungsmenge an den Elektroden allgemein) nicht verändert hat. Durch die erfindungsgemäße Bestimmung und Auswertung der Leitfähigkeit des Wassers kann die schwankende Wasserqualität bei der Bestimmung des optimalen Reinigungszeitpunkts berücksichtigt werden, und insbesondere so der optimale Reinigungszeitpunkt ohne Verfälschung durch die (momentane) Wasserqualität aus dem (momentanen) Elektrolysestrom ermittelt werden.

Im Rahmen der Erfindung ist es möglich, den (momentanen) Widerstand R der Kathode (oder allgemein der Elektroden) aus dem (momentanen) Elektrolysestrom $I_{el}$, der (momentanen) Leitfähigkeit LF und der Geometrie der Elektroden und der Behandlungskammer, in welcher die Elektroden angeordnet sind, zu bestimmen. Hierbei kann eine Serienschaltung der Widerstände der Elektroden und des dazwischenliegenden Wassers angenommen werden. Der Reinigungsbedarf kann dadurch festgestellt werden, dass dieser Widerstand R einen Grenzwiderstand $R^{GW}$ erreicht oder überschritten hat, also $R \geq R^{GW}$.

Im Allgemeinen können jedoch einfachere Auswertungen bereits eine recht genaue Annäherung an den optimalen Reinigungszeitpunkt bringen. Dabei wird in der Regel bei einer relativ hohen Leitfähigkeit LF der Elektrolysestrom $I_{el}$ gewichtet, so dass er einem niedrigeren Wert als gemessen entspricht, um den relativ niedrigen Wasserwiderstand zu berücksichtigen. Umgekehrt wird bei relativ niedriger Leitfähigkeit LF der Elektrolysestrom $I_{el}$ gewichtet, so dass er einem höheren Wert als gemessen entspricht, um dem Stromfluss trotz des hohen Wasserwiderstands Rechnung zu tragen. Die Feststellung des Reinigungsbedarfs kann dann durch einen Vergleich des so gewichteten Elektrolysestroms mit einem Grenzwert erfolgen. Alternativ und gleichwertig kann auch umgekehrt der Grenzwert in Abhängigkeit von LW verändert (gewichtet) und mit dem ungewichteten Elektrolysestrom $I_{el}$ verglichen werden.

Der Elektrolysestrom und die Leitfähigkeit werden typischerweise ständig oder vielfach in regelmäßigen Abständen während des Normalbetriebs gemessen; die Wasserbehandlungsvorrichtung verfügt dafür über geeignete Messeinrichtungen. Die Auswertung der Messwerte erfolgt typischerweise in einer elektronischen Steuereinheit, die bei Feststellung eines Reinigungsbedarfs automatisch in den Reinigungsbetrieb umschaltet (und nach Abschluss der Reinigung in den Normalbetrieb zurückschaltet).

Die erfindungsgemäße Reinigungs-Bedingung ist besonders einfach und daher gut in einer elektronischen Steuerung zu hinterlegen. Die Basiswassermenge wird typischerweise werkseitig festgelegt; durch sie kann die grundsätzliche Häufigkeit von Reinigungen bestimmt werden. Dafür muss ein Wasserzähler/Durchflussmesser eingerichtet und ausgewertet werden. Man beachte, dass $Q_0 * K$ zu einer Regenerationsintervallkonstanten zusammengefasst werden kann. Es kann vorgesehen sein, $I_{el}$ und/oder LF und/oder $I_{el}$/LF erst in der Formel zu aktualisieren, wenn mit einer neuen Messung eine definierte Mindeständerung, beispielsweise eine Änderung von mehr als 10%, gegenüber dem letztgültigen Wert eingetreten ist.

Bevorzugte Ausführungsformen der Erfindung

Bei einer vorteilhaften Variante des erfindungsgemäßen Verfahrens ist vorgesehen, dass der Reinigungsbedarf bei höheren Leitfähigkeiten LF bereits bei höheren Elektrolyseströmen $I_{el}$ festgestellt wird als bei niedrigen Leitfähigkeiten LF, und der Reinigungsbedarf bei niedrigeren Leitfähigkeiten LF erst bei niedrigeren Elektrolyseströmen $I_{el}$ festgestellt wird als bei höheren Leitfähigkeiten LF,
und/oder dass der Reinigungsbedarf bei höheren Elektrolyseströmen $I_{el}$ bereits bei höheren Leitfähigkeiten LF festgestellt wird als bei niedrigeren Elektrolyseströmen $I_{el}$, und der Reinigungsbedarf bei niedrigeren Elektrolyseströmen $I_{el}$ erst bei niedrigeren Leitfähigkeiten LF festgestellt wird als bei höheren Elektrolyseströmen $I_{el}$.
Durch dieses Vorgehen wird die Verfälschung der Indikationsfunktion des Elektrolysestroms für die Verkalkung der Kathode (oder allgemein die Zusetzung der Elektroden), verursacht durch den Serienwiderstand des Wassers zwischen den Elektroden, ausgeglichen. Im Falle einer näherungsweise konstanten Leitfähigkeit LF während eines Normalbetriebsintervalls (also die Dauer des Normalbetriebs vom letzten Reinigungsbetrieb bis zum nächsten Reinigungsbetrieb) nimmt der Elektrolysestrom in Folge der Kathodenverkalkung typischerweise stetig ab. Bei einem hypothetischen gleichen zeitlichen Verlauf von Elektrolyseströmen ist dann das Normalbetriebsintervall um so kürzer, je höher die gemessene Leitfähigkeit LF ist, und um so länger, je niedriger die gemessene Leitfähigkeit LF ist. Man beachte jedoch, dass bei unterschiedlichen Leitfähigkeiten LF bei gleichem Elektrodenzustand sich unterschiedliche Elektrolyseströme $I_{el}$ einstellen würden.

Bei einer vorteilhaften Variante wird der Reinigungsbedarf auch dadurch festgestellt, dass $Q \geq Q_0$. Dadurch kann eine maximale zu behandelnde Wassermenge bis zur nächsten Reinigung festgelegt werden. Dies ist insbesondere dann sinnvoll, wenn eine Reinigung auch unabhängig vom Verkalkungsgrad der Elektroden in gewissen Abständen erfolgen soll, etwa um einer Verkrustung vorzubeugen.

Eine andere Variante sieht vor, dass die Feststellung eines Reinigungsbedarfs ausgeschlossen ist, solange $Q < C * Q_0$, mit C: Mindestmengenfaktor, insbesondere wobei C so gewählt ist, dass $0 < C \leq 0,5$,

mit bevorzugt C= 0,5. Dadurch kann eine minimale zu behandelnde Wassermenge bis zur nächsten Reinigung festgelegt werden, wodurch wiederum die Wirtschaftlichkeit des Verfahrens verbessert werden kann.

Eine vorteilhafte Variante des erfindungsgemäßen Verfahrens ist dadurch gekennzeichnet, dass zur Bestimmung von $I_{el}$ Messwerte des Elektrolysestroms über ein Zeitintervall gemittelt werden. Dadurch wird vermieden, dass einzelne Messwertspitzen (die in der Regel auf vorübergehenden Betriebsstörungen oder Fehlmessungen beruhen) zu einem vorzeitigen Übergang in den Reinigungsbetrieb führen. Bevorzugt erfolgt jedoch keine Mittelung bis vor den Beginn des aktuellen Normalbetriebsintervalls. Das Zeitintervall ist typischerweise 1 Stunde oder kürzer. Alternativ kann auch stets der momentane Elektrolysestrom herangezogen werden.

Ebenfalls vorteilhaft ist eine Verfahrensvariante, bei der zur Bestimmung von LF Messwerte der elektrischen Leitfähigkeit des Wassers über ein Zeitintervall gemittelt werden. Dadurch wird ebenfalls vermieden, dass einzelne Messwertspitzen (die in der Regel auf vorübergehenden Betriebsstörungen oder Fehlmessungen beruhen) zu einem vorzeitigen Übergang in den Reinigungsbetrieb führen. Bevorzugt erfolgt jedoch keine Mittelung bis vor den Beginn des aktuellen Normalbetriebsintervalls. Zeitintervall ist typischerweise 1 Stunde oder weniger. Alternativ kann auch stets die momentane Leitfähigkeit herangezogen werden.

Besonders bevorzugt ist eine Variante, bei der im Reinigungsbetrieb an eine im vorangegangenen Normalbetriebsintervall als Kathode geschaltete Elektrode eine Spannung angelegt wird, wobei diese Elektrode als Anode geschaltet wird. Durch die an der Elektrode im Reinigungsbetrieb entstehenden $H^+$-Ionen können Ablagerungen aufgelöst werden, so dass die Reinigung intensiviert ist.

Bei einer anderen, ebenfalls bevorzugten Verfahrensvariante werden im Reinigungsbetrieb von mindestens einer der Elektroden, insbesondere einer im vorangegangenen Normalbetriebsintervall als Kathode geschalteten Elektrode, Ablagerungen mechanisch entfernt, insbesondere abgestreift. Mechanisches Entfernen kommt ohne chemische Reinigungsmittel aus und ist daher umweltfreundlich und kostengünstig. Die Ablagerungen bestehen typischerweise aus Kalk. Nach Entfernung der Ablagerungen kann anschließend das Wasser um die Elektrode (insbesondere in einem Bodenbereich unter der Elektrode) ausgespült werden; das Ausspülen kann dabei in jedem Reinigungsbetriebsintervall oder auch seltener (etwa jedes dritte Reinigungsbetriebsintervall) erfolgen. Alternativ zu einer mechanischen Entfernung von Ablagerungen, insbesondere mechanisch hochfesten Ablagerungen, können auch chemische Lösungsverfahren, etwa Spülungen mit geeigneten Säuren, angewandt werden.

Weiterhin vorteilhaft ist eine Variante, die vorsieht, dass ein Alarmsignal ausgegeben wird und/oder ein Leckageschutz aktiviert wird und/oder eine Abschaltung der Elektrolysespannung erfolgt und/oder eine Umgehungsschaltung (Bypass) zur Wasserbehandlungsvorrichtung aktiviert wird, wenn $I_{el} > I_{el}^{Alarm}$ und/oder $I_{el}/LF > (I_{el}/LF)^{Alarm}$, mit $I_{el}^{Alarm}$: Alarmgrenzwert des Elektrolysestroms und $(I_{el}/LF)^{Alarm}$: Alarmgrenzwert des Quotienten von Elektrolysestrom und Leitfähigkeit. Dadurch kann ein Kurzschluss zwischen den Elektroden leicht erkannt werden, und daraus resultierende Gefahren können beseitigt werden.

Eine andere, bevorzugte Verfahrensvariante sieht vor, dass bei der Feststellung des Reinigungsbedarfs eine an den Elektroden bisher erfolgte Anzahl von Reinigungsbetriebsintervallen berücksichtigt wird. Die Abreinigung der Elektroden lässt meist noch einige Restablagerungen zurück; dies beeinflusst den dann noch erreichbaren Elektrolysestrom. Durch Berücksichtigung der Anzahl der vorangegangenen Reinigungszyklen kann dieser Effekt kompensiert werden. Bei Verwendung der Abbruchbedingung $Q \geq Q_0 * K * I_{el}/LF$ kann beispielsweise die Basiswassermenge $Q_0$ mit zunehmender Anzahl reduziert werden bzw. eine entsprechende Korrekturfunktion eingeführt werden.

Ebenfalls bevorzugt ist eine Verfahrensvariante, bei der eine Alarmmeldung ausgegeben wird, wenn nach Abschluss eines Reinigungsbetriebsintervalls ein Mindestwert des Elektrolysestroms $I_{el}^{Min}$ durch den Elektrolysestrom $I_{el}$ nicht mehr erreicht wird,

insbesondere wobei der Mindestwert des Elektrolysestroms abhängig von der Leitfähigkeit LF bestimmt wird. Wird der Mindestwert vom Elektrolysestrom nicht mehr erreicht, deutet dies auf einen Defekt der Reinigungsfunktion hin, und über die Alarmmeldung kann eine Reparatur veranlasst werden.

In den Rahmen der vorliegenden Erfindung fällt auch eine elektrolytische Wasserbehandlungsvorrichtung, ausgebildet zur automatischen Durchführung eines obigen, erfindungsgemäßen Verfahrens.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Die Erfindung ist in der Zeichnung dargestellt und wird anhand von Ausführungsbeispielen näher erläutert. Es zeigen:

Fig.1      ein Ablaufdiagramm einer Variante des erfindungsgemäßen Verfahrens;

Fig. 2     eine Ausführungsform einer erfindungsgemäßen Wasserbehandlungsvorrichtung zur Ausführung des erfindungsgemäßen Verfahrens.

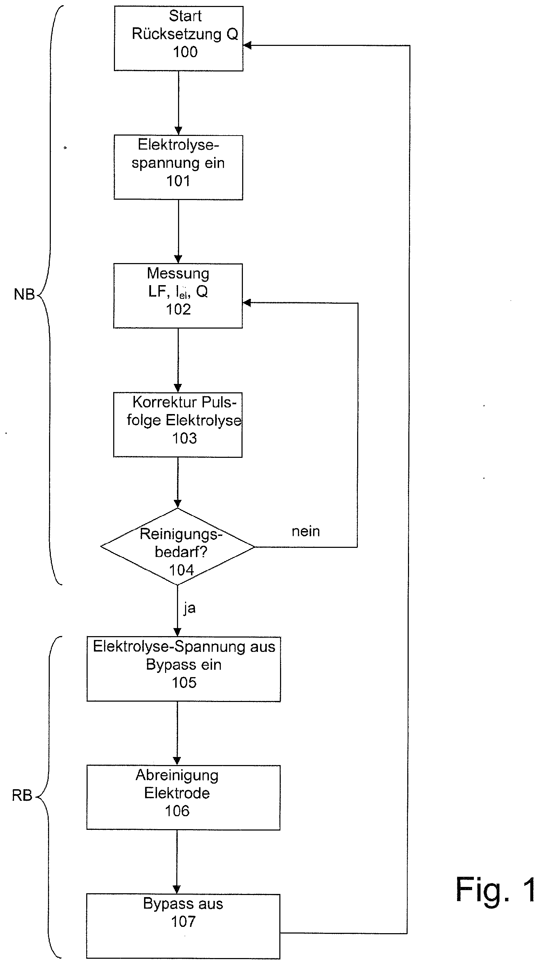

Die **Fig. 1** illustriert beispielhaft den Ablauf des erfindungsgemäßen Verfahrens zum Betrieb einer elektrolytischen Wasserbehandlungsvorrichtung, die zur Kalkstabilisierung in einer nachfolgenden Wasserinstallation eingesetzt wird. Das Verfahren wird typischerweise mittels einer elektronischen Steuereinrichtung implementiert, mit der insbesondere Messwerte ausgelesen, Abbruchbedingungen geprüft und Betriebsmodusumschaltungen erfolgen können. Während des Verfahrens wechseln sich Normalbetriebsintervalle und Reinigungsbetriebsintervalle ab.

Das Verfahren beginnt im Normalbetrieb NB bei 100 mit der Rücksetzung der Messgröße Q, welche die im laufenden Normalbetriebsintervall bereits behandelte Wassermenge mitverfolgt. Da bisher noch keine Behandlung erfolgt ist (entsprechend sind die Elektroden noch sauber), wird Q auf null gesetzt.

Anschließend wird die Elektrolysespannung, die für die eigentliche Wasserbehandlung sorgt, eingeschaltet 101. Im illustrierten Beispiel wird eine gepulste Gleichspannung zwischen zwei Elektroden eingesetzt. Man beachte, dass die Polung auch von Zeit zu Zeit umgekehrt werden kann, um die kathodenseitig auftretende Verkalkung auf beide Elektroden zu verteilen. Man beachte weiterhin, dass die Elektrolysespannung im Normalbetrieb vorübergehend abgeschaltet werden kann, solange kein Wasser von der nachfolgenden Wasserinstallation gebraucht wird (nicht gesondert illustriert).

Anschließend 102 wird die Leitfähigkeit LF im Wasser gemessen; diese Messung erfolgt separat von der Elektrolyse mit einem eigenen Sensor. Ebenso wird der Elektrolysestrom $I_{el}$ gemessen; dafür wird eine "Puls an"-Phase abgepasst (sollte eine variable Spannung zur Elektrolyse eingesetzt werden, so sollten alle Messungen des Elektrolysestroms in Momenten gleicher Elektrolysespannung erfolgen oder mit dem Ohm'schen Gesetz auf die gleiche Spannung umgerechnet werden). Schließlich wird im gezeigten Beispiel auch die aktuelle, bisher behandelte Wassermenge Q ausgelesen. Falls gewünscht, kann in späteren Messdurchgängen 102 des gleichen Normalbetriebsintervalls eine Mittelung von letzten Messwerten LF und/oder $I_{el}$ (etwa der letzten fünf Messwerte) durchgeführt werden, und die Mittelwerte können in den nachfolgenden Schritten 103, 104 anstelle der Einzelmesswerte verwendet werden.

Nun wird im illustrierten Beispiel die Pulsfrequenz und/oder die Dauer der einzelnen Pulse der Elektrolysespannung an den derzeitigen Elektrolysestrom angepasst 103. In der Regel ist unter Berücksichtigung der zwischen den Pulsen liegenden Stromflusspausen ein konstanter Ladungsfluss pro Zeit gewünscht. Bei abnehmendem Elektrolysestrom während der Pulse wird dann die Dauer der einzelnen Pulse verlängert und/oder die Pulsfrequenz erhöht.

Daraufhin wird geprüft, ob ein Reinigungsbedarf für eine Elektrode besteht 104. Dazu wird eine vordefinierte Abbruchbedingung für den Normalbetrieb NB geprüft. Im vorliegenden Beispiel lautet die Abbruchbedingung $Q \geq Q_0 * K * I_{el}/LF$, mit $Q_0$: eine vordefinierte (aber einstellbare) Basiswassermenge und K: eine vordefinierte Umrechnungskonstante.

Falls die Abbruchbedingung nicht erfüllt ist, wird der Normalbetrieb NB mit der nächsten Messung von LF, $I_{el}$ und Q fortgesetzt.

Falls die Abbruchbedingung erfüllt ist, erfolgt ein Übergang in den Reinigungsbetrieb RB. Die Elektrolyse wird abgeschaltet und die Behandlungskammer wird vom Wasserfluss abgetrennt bzw. durch geeignete Umleitungen umgangen ("Bypass") 105. Sodann schließt sich die eigentliche Abreinigung der Elektrode (Kathode) 106 an, hier durch Betätigung eines mechanischen Abstreifers. Falls gewünscht, können die abgelösten Kalkpartikel ausgeschwemmt werden (alternativ erfolgt eine Sammlung der Kalkpartikel, typischerweise am Boden, bis zu einer Ausschwämmung anlässlich eines nachfolgenden Reinigungsbetriebsintervalls; abgelöste Kalkpartikel können durch einen integrierten Filter von der nachfolgenden Wasserinstallation ferngehalten werden). Nach Abschluss der Abreinigung der Elektrode wird der Bypass aufgehoben 107. Sodann geht die Wasserbehandlungsvorrichtung wieder in den Normalbetrieb NB über, indem ein neues Normalbetriebsintervall gestartet wird 100.

Man beachte, dass in einem nicht erfindungsgemäßen Beispiel der Reinigungsbedarf auch mit Abbruchbedingungen, die ohne Auswertung der bisher behandelten Wassermenge Q auskommen, festgestellt werden kann. In diesem Fall kann in 100 die Rücksetzung von Q und in 102 das Auslesen von Q entfallen. Im Rahmen der Prüfung des Reinigungsbedarfs 104 kann dann beispielsweise mit folgender Grenzwerttabelle gearbeitet werden:

| Leitfähigkeitsintervall (LW von-bis) | Grenzwert Elektrolysestrom $I_{el}^{GW}$(LW) |
|---|---|
| bis 400 μS/cm | 200 mA |
| 400-800 μS/cm | 300 mA |
| über 800 μS/cm | 400 mA |

Ist der momentane Elektrolysestrom $I_{el}$ kleiner oder gleich dem für die momentane Leitfähigkeit LF gültigen Grenzwert $I_{el}^{GW}$(LW), so wird ein Reinigungsbedarf festgestellt.

Man beachte weiterhin, dass bei geeigneten Wasserbehandlungsvorrichtungen die Wasserbehandlungsfunktion auch im Reinigungsbetrieb aufrecht erhalten werden kann und entsprechend dann im Reinigungsbetrieb der Elektrolysestrom aufrecht erhalten wird und eine Bypassschaltung entfällt. Die Schritte 105 und 107 entfallen dann ganz, und Schritt 101 entfällt ab dem zweiten Normalbetriebsintervall.

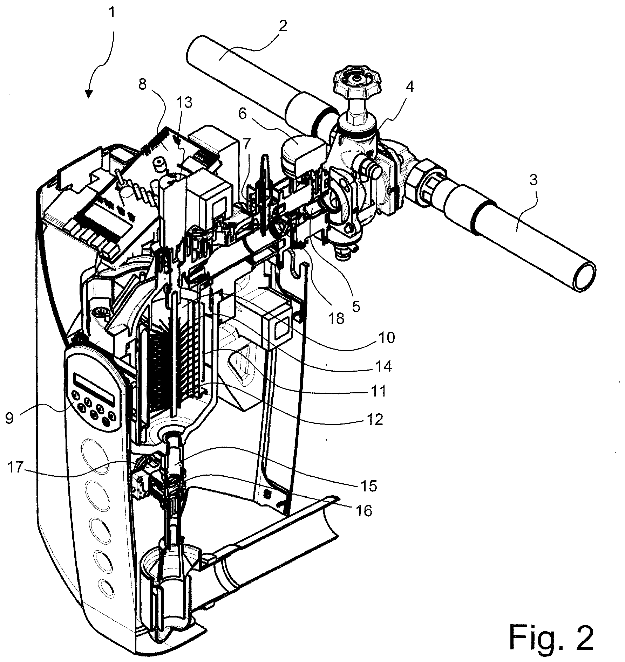

**Fig. 2** illustriert beispielhaft eine erfindungsgemäße elektrolytische Wasserbehandlungsvorrichtung 1. Diese wird über einen Zulauf 2 mit unbehandeltem Wasser versorgt, und behandeltes Wasser wird über einen Ablauf 3 abgeleitet. Die Wasserbehandlungsvorrichtung 1 ist dabei über ein Anschlussstück 4 angeschlossen, welches ein Umgehungsventil (Bypass) aufweist. Zusätzlich verfügt die Wasserbehandlungsvorrichtung 1 noch über einen Leckageschutz (Absperrventil) 5, welcher über einen Motor 6 automatisch angesteuert werden kann.

Einfließendes Wasser passiert zunächst einen Leitfähigkeitssensor 7, mit dem die Leitfähigkeit LF des zufließenden Wassers ständig überwacht wird. Die Leitfähigkeit LF wird dabei von einer Elektronik (elektronischen Steuereinrichtung) 8 ausgelesen. Das Wasser fließt in eine Behandlungskammer (Elektrolysekammer) 10 ein, in welcher eine zylindermantelförmige Anode 11 und eine bürstenförmige Kathode 12 angeordnet sind. Mittels der Elektronik 8 können die Elektroden 11, 12 mit einer Elektrolysespannung, die über der Zersetzungsspannung von Wasser liegt, beaufschlagt werden. Die Elektronik 8 bestimmt dabei ständig den Elektrolysestrom $I_{el}$. Der Wasserdurchfluss durch die Wasserbehandlungseinrichtung 1 wird außerdem mit einem Durchflussmesser 18 überwacht.

Mittels der während der Wasserbehandlung gewonnenen, fortlaufend aktualisierten Messwerte LF, $I_{el}$ und gegebenenfalls der im laufenden Normalbetriebsintervall durch die Wasserbehandlungsvorrichtung geflossenen (behandelten) Wassermenge Q stellt die Elektronik 8 fest, wenn eine Reinigung der Kathode 12 erforderlich ist. Dann lässt die Elektronik 8 einen Abstreifer 14 relativ zur Kathode 12 rotieren, indem die Kathode 12 mittels eines Abreinigungsmotors 13 gedreht wird. Dabei lösen sich Kalkablagerungen von der Kathode 12 und sinken nach unten zu Boden. Über einen Spülkanal 15 können bei geöffnetem Spülventil 16, welches über den Motor 17 automatisiert betätigbar ist, die Kalkablagerungen ausgespült werden.

Die Elektronik (elektronische Steuereinrichtung) 8 kann über ein Display 9 und eine zugehörige Tastatur bedient und programmiert werden.

Bezugszeichenliste

1: elektrolytische Wasserbehandlungsvorrichtung
2: Zulauf
3: Ablauf für behandeltes Wassers
4: Anschlussstück mit Umgehungsventil (Bypass)
5: Leckageschutz (Absperrventil)
6: Motor für Leckageschutz
7: Leitfähigkeitssensor
8: Elektronik (elektronische Steuereinrichtung)
9: Display und Tastatur
10: Behandlungskammer (Elektrolysekammer)
11: Anode
12: Kathode
13: Motor für Abreinigung
14: Abstreifer
15: Spülkanal
16: Spülventil
17: Motor für Spülventil
18: Durchflussmesser

100:    Start eines Normalbetriebsintervalls und Rücksetzung von Q
101:    Elektrolysespannung ein
102:    Messung LF, $I_{el}$, Q
103:    Korrektur Pulsfolge Elektrolyse
104:    Reinigungsbedarf ? (Prüfung Abbruchbedingung)
105:    Elektrolysespannung aus, Bypass ein
106:    Abreinigung Elektrode
107:    Bypass aus
NB:     Normalbetrieb
RB:     Reinigungsbetrieb


**Patentansprüche**

**1.** Verfahren zum Betrieb einer elektrolytischen Wasserbehandlungsvorrichtung (1),
wobei in einem Normalbetrieb (NB) an mindestens zwei Elektroden (11, 12) eine elektrische Spannung durchgehend oder gepulst angelegt wird (101), so dass ein in der Wasserbehandlungsvorrichtung (1) vorhandenes Wasser während des Anliegens der Spannung von einem elektrischen Elektrolysestrom $I_{el}$ durchflossen wird,
wobei in einem Reinigungsbetrieb (RB) mindestens eine der Elektroden (11, 12) abgereinigt wird (106),
wobei bei Feststellung eines Reinigungsbedarfs der mindestens einen Elektrode (11, 12) vom Normalbetrieb (NB) in den Reinigungsbetrieb (RB) gewechselt wird,
wobei zur Feststellung des Reinigungsbedarfs der Elektrolysestrom $I_{el}$ gemessen und ausgewertet wird,
wobei zur Feststellung des Reinigungsbedarfs weiterhin eine Leitfähigkeit LF des Wassers gemessen und ausgewertet wird,
und wobei der Reinigungsbedarf dadurch festgestellt wird, dass $Q \geq Q_0 * K * I_{el}/LF$,
mit Q: die seit dem letzten Reinigungsbetrieb (RB) bisher behandelte Wassermenge; $Q_0$: Basiswassermenge; K: Umrechnungskonstante.

**2.** Verfahren nach Anspruch 1, **dadurch gekennzeichnet,**
**dass** der Reinigungsbedarf bei höheren Leitfähigkeiten LF bereits bei höheren Elektrolyseströmen $I_{el}$ festgestellt wird als bei niedrigen Leitfähigkeiten LF, und der Reinigungsbedarf bei niedrigeren Leitfähigkeiten LF erst bei niedrigeren Elektrolyseströmen $I_{el}$ festgestellt wird als bei höheren Leitfähigkeiten LF,
und/oder dass der Reinigungsbedarf bei höheren Elektrolyseströmen $I_{el}$ bereits bei höheren Leitfähigkeiten LF festgestellt wird als bei niedrigeren Elektrolyseströmen $I_{el}$, und der Reinigungsbedarf bei niedrigeren Elektrolyseströmen $I_{el}$ erst bei niedrigeren Leitfähigkeiten LF festgestellt wird als bei höheren Elektrolyseströmen $I_{el}$.

**3.** Verfahren nach Anspruch 1 oder 2, **dadurch gekennzeichnet, dass** der Reinigungsbedarf auch dadurch festgestellt wird, dass $Q \geq Q_0$.

**4.** Verfahren nach einem der vorherigen Ansprüche , **dadurch gekennzeichnet, dass** die Feststellung eines Reinigungsbedarfs ausgeschlossen ist, solange
$Q < C * Q_0$, mit C: Mindestmengenfaktor,
insbesondere wobei C so gewählt ist, dass $0 < C \leq 0{,}5$,
mit bevorzugt C= 0,5.

**5.** Verfahren nach einem der vorhergehenden Ansprüche, **dadurch gekennzeichnet, dass** zur Bestimmung von $I_{el}$ Messwerte des Elektrolysestroms über ein Zeitintervall gemittelt werden.

**6.** Verfahren nach einem der vorhergehenden Ansprüche, **dadurch gekennzeichnet, dass** zur Bestimmung von LF Messwerte der elektrischen Leitfähigkeit des Wassers über ein Zeitintervall gemittelt werden.

**7.** Verfahren nach einem der vorhergehenden Ansprüche, **dadurch gekennzeichnet, dass** im Reinigungsbetrieb (RB) an eine im vorangegangenen Normalbetriebsintervall als Kathode (12) geschaltete Elektrode (11, 12) eine Spannung angelegt wird, wobei diese Elektrode (11, 12) als Anode geschaltet wird.

**8.** Verfahren nach einem der vorhergehenden Ansprüche, **dadurch gekennzeichnet, dass** im Reinigungsbetrieb (RB) von mindestens einer der Elektroden (11, 12), insbesondere einer im vorangegangenen Normalbetriebsintervall als Kathode (12) geschalteten Elektrode (11, 12), Ablagerungen mechanisch entfernt, insbesondere abgestreift werden.

9. Verfahren nach einem der vorhergehenden Ansprüche **dadurch gekennzeichnet, dass** ein Alarmsignal ausgegeben wird und/oder ein Leckageschutz aktiviert wird und/oder eine Abschaltung der Elektrolysespannung erfolgt und/oder eine Umgehungsschaltung (Bypass) zur Wasserbehandlungsvorrichtung (1) aktiviert wird, wenn $I_{el} > I_{el}^{Alarm}$ und/oder $I_{el}/LF > (I_{el}/LF)^{Alarm}$, mit $I_{el}^{Alarm}$: Alarmgrenzwert des Elektrolysestroms und $(I_{el}/LF)^{Alarm}$: Alarmgrenzwert des Quotienten von Elektrolysestrom und Leitfähigkeit.

10. Verfahren nach einem der vorhergehenden Ansprüche, **dadurch gekennzeichnet, dass** bei der Feststellung des Reinigungsbedarfs eine an den Elektroden (11, 12) bisher erfolgte Anzahl von Reinigungsbetriebsintervallen berücksichtigt wird.

11. Verfahren nach einem der vorhergehenden Ansprüche, **dadurch gekennzeichnet, dass** eine Alarmmeldung ausgegeben wird, wenn nach Abschluss eines Reinigungsbetriebsintervalls ein Mindestwert des Elektrolysestroms $I_{el}^{Min}$ durch den Elektrolysestrom $I_{el}$ nicht mehr erreicht wird,
insbesondere wobei der Mindestwert des Elektrolysestroms abhängig von der Leitfähigkeit LF bestimmt wird.

12. Elektrolytische Wasserbehandlungsvorrichtung (1), ausgebildet zur automatischen Durchführung eines Verfahrens nach einem der vorhergehenden Ansprüche.

## Claims

1. Method for operating an electrolytic water treatment device (1), wherein in normal operation (NB) an electric voltage is applied (101) continuously or in a pulsed manner to at least two electrodes (11, 12) such that an electric electrolysis current $I_{ei}$ flows through the water that is present in the water treatment device (1) while the voltage is applied, wherein in cleaning operation (RB) at least one of the electrodes (11, 12) is cleaned (106),
wherein, when a necessity for cleaning of the at least one electrode (11, 12) is identified, it is switched from normal operation (NB) to cleaning operation (RB),
wherein for identifying the necessity for cleaning, the electrolysis current $I_{ei}$ is measured and evaluated,
wherein for identifying the necessity for cleaning, a conductivity LF of the water is moreover measured and evaluated, and wherein the necessity for cleaning is identified by
$Q \geq Q_0 * K * I_{ei}/LF$,
with Q: the amount of water treated since the last cleaning operation (RB); $Q_0$: basic water amount; K: conversion constant.

2. Method according to claim 1, **characterized in that** with higher conductivities LF the necessity for cleaning is identified already with higher electrolysis currents $I_{ei}$ than with lower conductivities LF, and with lower conductivities LF the necessity for cleaning is identified only with lower electrolysis currents $I_{ei}$ than with higher conductivities LF, and/or that with higher electrolysis currents $I_{ei}$ the necessity for cleaning is identified already with higher conductivities LF than with lower electrolysis currents $I_{ei}$, and with lower electrolysis currents $I_{ei}$ the necessity for cleaning is identified only with lower conductivities LF than with higher electrolysis currents $I_{ei}$.

3. Method according to claim 1 or 2, **characterized in that** the necessity for cleaning is also identified by $Q \geq Q_0$.

4. Method according to any one of the preceding claims, **characterized in that** identification of a necessity for cleaning is excluded as long as $Q < C * Q_0$ with C: minimum amount factor,
in particular wherein C is selected such that $0 < C \leq 0.5$ with preferably $C = 0.5$.

5. Method according to any one of the preceding claims, **characterized in that** for determining $I_{ei}$, measured values of the electrolysis current are averaged over a time interval.

6. Method according to any one of the preceding claims, **characterized in that** for determining LF, measured values of the electric conductivity of the water are averaged over a time interval.

7. Method according to any one of the preceding claims, **characterized in that** in cleaning operation (RB) a voltage is applied to an electrode (11, 12), wherein this electrode (11, 12) is switched as anode, and wherein said electrode (11, 12) was switched as cathode (12) in the previous normal operation interval.

8. Method according to any one of the preceding claims, **characterized in that** in cleaning operation (RB) of at least one of the electrodes (11, 12), in particular of an electrode (11, 12) which was switched as cathode (12) in the previous normal operation interval, deposits are mechanically removed, in particular wiped off.

9. Method according to any one of the preceding claims, **characterized in that** an alarm signal is issued and/or a leakage protection is activated and/or the electrolysis voltage is switched off and/or a bypass circuitry (Bypass) to the water treatment device (1) is activated if $I_{ei} > I_{ei}$ Alarm and/or $I_{ei}/LF > (I_{ei}/LF)^{Alarm}$, with $I_{ei}^{Alarm}$: alarm limit value of the electrolysis current and $(I_{ei}/LF)^{Alarm}$: alarm limit value of the quotient of electrolysis current and conductivity.

10. Method according to any one of the preceding claims, **characterized in that** for identifying a necessity for cleaning, a number of cleaning operation intervals that has been carried out on the electrodes (11, 12) so far is taken into account.

11. Method according to any one of the preceding claims, **characterized in that** an alarm message is issued if, after termination of a cleaning operation interval, a minimum value of the electrolysis current $I_{ei}^{Min}$ is no longer obtained by the electrolysis current $I_{ei}$,
in particular wherein the minimum value of the electrolysis current is determined in dependence on the conductivity LF.

12. Electrolytic water treatment device (1) designed for automatic performance of a method according to any one of the preceding claims.

### Revendications

1. Procédé de fonctionnement d'un dispositif électrolytique de traitement d'eau (1), selon lequel, dans un mode normal (NB), une tension électrique est appliquée de façon continue ou pulsée (101) sur au moins deux électrodes (11, 12), de sorte qu'une eau présente dans le dispositif de traitement d'eau (1) est parcourue par un courant électrique d'électrolyse $I_{el}$ pendant l'application de la tension,
selon lequel, dans un mode de nettoyage (RB), au moins une des électrodes (11, 12) est nettoyée (106),
selon lequel, lorsqu'un besoin de nettoyage de ladite au moins une électrode (11, 12) est constaté, on passe du mode normal (NB) au mode de nettoyage (RB), selon lequel, pour constater le besoin de nettoyage, on mesure et évalue le courant d'électrolyse $I_{el}$,
selon lequel, pour constater le besoin de nettoyage, on mesure et évalue en outre une conductivité LF de l'eau,
et selon lequel le besoin de nettoyage est constaté par le fait que $Q \geq Q_0 * K * I_{el}/LF$,
avec Q : la quantité d'eau traitée depuis le dernier mode de nettoyage (RB) ; $Q_0$ : la quantité d'eau de base ; K : une constante de conversion.

2. Procédé selon la revendication 1, **caractérisé en ce**
**qu'**à des conductivités LF plus élevées, le besoin de nettoyage est constaté déjà à des courants d'électrolyse $I_{el}$ plus élevés qu'à des conductivités LF plus faibles, et, à des conductivités LF plus faibles, le besoin de nettoyage est constaté seulement à des courants d'électrolyse $I_{el}$ plus faibles qu'à des conductivités LF plus élevées, et/ou qu'à des courants d'électrolyse $I_{el}$ plus élevés, le besoin de nettoyage est constaté déjà à des conductivités LF plus élevées qu'à des courants d'électrolyse $I_{el}$ plus faibles, et, à des courants d'électrolyse $I_{el}$ plus faibles, le besoin de nettoyage est constaté seulement à des conductivités LF plus faibles qu'à des courants d'électrolyse $I_{el}$ plus élevés.

3. Procédé selon la revendication 1 ou 2, **caractérisé en ce que** le besoin de nettoyage est aussi constaté par le fait que $Q \geq Q_0$.

4. Procédé selon l'une des revendications précédentes, **caractérisé en ce que** la constatation d'un besoin de nettoyage est exclue tant que
$Q < C * Q_0$, avec C : facteur de quantité minimale,
C étant en particulier choisi de sorte que $0 < C \leq 0,5$,
avec de préférence C = 0,5.

5. Procédé selon l'une des revendications précédentes, **caractérisé en ce que** pour déterminer $I_{el}$, on fait la moyenne de valeurs de mesure du courant d'électrolyse sur un intervalle de temps.

6. Procédé selon l'une des revendications précédentes, **caractérisé en ce que** pour déterminer LF, on fait la moyenne de valeurs de mesure de la conductivité électrique de l'eau sur un intervalle de temps.

7. Procédé selon l'une des revendications précédentes, **caractérisé en ce qu'**en mode de nettoyage (RB), une tension est appliquée sur une électrode (11, 12) branchée en cathode (12) dans l'intervalle de mode normal précédent, cette électrode (11, 12) étant branchée en anode.

8. Procédé selon l'une des revendications précédentes, **caractérisé en ce qu'**en mode de nettoyage (RB), les dépôts sont enlevés mécaniquement, en particulier raclés, d'au moins une des électrodes (11, 12), en particulier d'une électrode (11, 12) branchée en cathode (12) dans l'intervalle de mode normal précédent.

9. Procédé selon l'une des revendications précédentes **caractérisé en ce qu'**un signal d'alarme est émis et/ou une protection contre les fuites est activée et/ou une coupure de la tension d'électrolyse a lieu et/ou un circuit de dérivation (bypass) du dispositif de traitement d'eau (1) est activé lorsque $I_{el} > I_{el}^{Alarm}$ et/ou $I_{el}/LF > (I_{el}/LF)^{Alarm}$, avec $I_{el}^{Alarm}$ : valeur limite d'alarme du courant d'électrolyse et $(I_{el}/LF)^{Alarm}$ : valeur limite d'alarme du quotient du courant d'électrolyse et de la conductivité.

10. Procédé selon l'une des revendications précédentes, **caractérisé en ce que** pour la constatation du besoin de nettoyage, il est tenu compte d'un nombre d'intervalles de mode de nettoyage ayant eu lieu jusqu'ici sur les électrodes (11, 12).

11. Procédé selon l'une des revendications précédentes, **caractérisé en ce qu'**un message d'alarme est émis lorsque, à l'issue d'un intervalle de mode de nettoyage, une valeur minimale du courant d'électrolyse $I_{el}^{Min}$ n'est plus atteinte par le courant d'électrolyse $I_{el}$,
la valeur minimale du courant d'électrolyse étant en particulier déterminée en fonction de la conductivité LF.

12. Dispositif électrolytique de traitement d'eau (1), conçu pour mettre en oeuvre automatiquement un procédé selon l'une des revendications précédentes.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19852956 C1

- EP 1108683 A2